# EUROPÄISCHE PATENTSCHRIFT

(11) **EP 2 826 591 B1**
(45) Veröffentlichungstag und Bekanntmachung des Hinweises auf die Patenterteilung: **05.09.2018**
(21) Anmeldenummer: 14175551.2
(22) Anmeldetag: 03.07.2014
(51) Int. Cl.: B23Q 3/06, B25B 5/00, B23Q 17/00

(54) **Spannvorrichtung zum Positionieren von Werkstücken, Werkzeugmaschine mit einer derartigen Spannvorrichtung, Verfahren zum Positionieren von Werkstücken mittels einer derartigen Spannvorrichtung**
Clamping device for positioning workpieces, machine tool with such a device, method for positioning workpieces by means of such a clamping device
Dispositif de serrage destiné à positionner des pièces à usiner, machine-outil dotée d'un tel dispositif de serrage, procédé de positionnement de pièces à usiner à l'aide d'un tel dispositif de serrage

(30) Priorität: 17.07.2013 DE 102013214019
(43) Veröffentlichungstag der Anmeldung: 21.01.2015
(73) Patentinhaber: TRUMPF Werkzeugmaschinen GmbH + Co. KG, 71254 Ditzingen (DE)
(72) Erfinder: Linder, Bernd, 72501 Gammertingen (DE); Popp, Torsten, 72505 Krauchenwies (DE); Gaiser, Bernd, 72519 Veringendorf (DE)
(74) Vertreter: Kohler Schmid Möbus Patentanwälte

(56) Entgegenhaltungen:
- EP-A2- 0 264 078
- US-A- 5 139 246

## Beschreibung

Die Erfindung betrifft eine Spannvorrichtung zum Positionieren von Werkstücken gegenüber einer Bearbeitungseinrichtung einer Werkzeugmaschine zum Bearbeiten von Werkstücken, mit zwei Spannelementen mit einem für die Spannelemente vorgesehenen und als Servoantrieb ausgebildeten Stellantrieb, welcher wenigstens ein Spannelement relativ zu dem anderen Spannelement bewegt und welcher dadurch die Spannelemente relativ zueinander aufeinander zu bewegt und in einen Funktionszustand überführt, in welchem die Spannelemente bei Anordnung eines Werkstücks zwischen den Spannelementen das Werkstück zwischen sich einspannen, indem die Spannelemente einander an dem Werkstück gegenüberliegen und das Werkstück an der Außenseite jeweils mit einer Einspannkraft längs einer Wirkungslinie der jeweiligen Einspannkraft kraftbeaufschlagen sowie mit einer numerischen Steuerungsvorrichtung für den Stellantrieb, wobei der Stellantrieb die Spannelemente bei der Überführung in den Funktionszustand zunächst relativ zueinander in eine Spann-Ausgangsstellung aufeinander zu bewegt und ausgehend von der Spann-Ausgangsstellung aufeinander zu beaufschlagt und dadurch relativ zueinander in eine dem Funktionszustand der Spannelemente zugeordnete Funktionsstellung aufeinander zu bewegt und wobei die Spann-Ausgangsstellung der Spannelemente vorzugsweise durch einen Teachvorgang in der numerischen Steuerungsvorrichtung des Stellantriebs hinterlegt ist.

Die Erfindung betrifft des Weiteren eine Werkzeugmaschine mit einer derartigen Spannvorrichtung sowie ein mit einer derartigen Spannvorrichtung durchgeführtes Verfahren zum Positionieren von Werkstücken gegenüber einer Bearbeitungseinrichtung einer Werkzeugmaschine zum Bearbeiten von Werkstücken.

Die Erfindung betrifft schließlich auch ein Computerprogramm zum Betreiben einer Spannvorrichtung der vorstehenden Art, ein Verfahren zum Erstellen eines derartigen Computerprogramms sowie ein Computerprogrammprodukt zum Durchführen des genannten Verfahrens zum Erstellen eines Computerprogramms.

Gattungsgemäßer Stand der Technik ist bekannt aus US 5,139,246 A und EP 0 264 078 A2.

US 5,139,246 A betrifft eine Spannvorrichtung sowie ein Verfahren zum Einspannen eines Werkstücks mittels zweier Spannbacken, die von einem numerisch gesteuerten Antriebsmotor gegenläufig längs einer Antriebsspindel bewegt werden. Zum Einspannen eines Werkstücks fahren die Spannbacken nacheinander zwei unterschiedliche Spannbackenpositionen an. Eine erste Spannbackenposition wird in Abhängigkeit von den Abmessungen des einzuspannenden Werkstücks in der Bewegungsrichtung der Spannbacken definiert. Ausgehend von der ersten Spannbackenposition werden die Spannbacken in eine zweite Spannbackenposition zugestellt, in welcher sie näher beieinander liegen als in der ersten Spannbackenposition und die in Abhängigkeit von dem Elastizitätsverhalten des einzuspannenden Werkstücks festgelegt wird. Befinden sich die Spannbacken in der zweiten Spannbackenposition, so wird das Werkstück maximal geklemmt. Aber auch bereits in der ersten Spannbackenposition üben die Spannbacken eine Kraft auf das einzuspannende Werkstück aus.

EP 0 246 078 A2 offenbart eine Spannvorrichtung zum Einspannen von Werkstücken mittels Spannarmen, die durch einen Induktionsmotor mit einer Schwenkbewegung angetrieben werden. Zum Einspannen der Werkstücke wird der Induktionsmotor nacheinander auf eine erste Spannungsquelle und auf eine zweite Spannungsquelle aufgeschaltet. An der ersten Spannungsquelle wird der Induktionsmotor so lange betrieben, bis die Spannarme durch eine mit hoher Geschwindigkeit ausgeführte Schwenkbewegung an den einzuspannenden Werkstücken zur Anlage kommen. Nach dem Umschalten auf die zweite Spannungsquelle steht an dem Induktionsmotor das maximale Motordrehmoment zur Verfügung, so dass die einzuspannenden Werkstücke durch die Spannarme mit einer maximalen Haltekraft beaufschlagt werden können.

Weiterer Stand der Technik ist offenbart in DE 10 2010 003 807 A1. Diese Druckschrift beschreibt eine Rohrbearbeitungsmaschine mit einem Spannfutter zum Einspannen eines zu bearbeitenden Rohres. Das Spannfutter weist Spannbacken auf, die mittels elektrischer, pneumatischer oder hydraulischer Aktoren in radialer Richtung eines Einspannzentrums des Spannfutters aus einer Außerfunktionsstellung in eine Funktionsstellung bewegt werden, in welcher die Spannbacken ein zwischen ihnen angeordnetes Rohr einspannen. Drucksensoren an den Spannbacken dienen dazu, die von den Spannbacken in der Funktionsstellung auf das betreffende Rohr ausgeübten Kräfte zu regeln.

Ein besonders schonendes Einspannen von an einer Werkzeugmaschine zu bearbeitenden Werkstücken zu ermöglichen, ist Aufgabe der vorliegenden Erfindung.

Erfindungsgemäß gelöst wird diese Aufgabe durch die Spannvorrichtung nach Patentanspruch 1, die Werkzeugmaschine nach Patentanspruch 9, das Verfahren nach Patentanspruch 10, das Computerprogramm nach Patentanspruch 11, das Verfahren zum Erstellen eines Computerprogramms nach Patentanspruch 12 und das Computerprogrammprodukt nach Patentanspruch 13.

Gemäß den unabhängigen Patentansprüchen ist die Überführung zweier Spannelemente einer Spannvorrichtung zum Positionieren von Werkstücken in einen Funktionszustand in wenigstens zwei Phasen unterteilt. Zunächst werden die Spannelemente mittels des Stellantriebs der erfindungsgemäßen Spannvorrichtung relativ zueinander in eine Spann-Ausgangsstellung aufeinander zu bewegt. In der Spann-Ausgangsstellung beaufschlagen die Spannelemente das einzuspannende Werkstück nicht. Nachdem der Stellantrieb der erfindungsgemäßen Spannvorrichtung als Servoantrieb ausgeführt ist und dementsprechend über einen oder mehrere elektronisch geregelte Antriebsmotoren zur Erzeugung der Bewegung der Spannelemente verfügt, können die Spannelemente die Spann-Ausgangsstellung mit großer Genauigkeit anfahren. Der Stellantrieb der anspruchsgemäßen Spannvorrichtung weist eine numerische Steuerungsvorrichtung mit einem Speicher auf, in welchem die Spann-Ausgangs-stellung der Spannelemente vorzugsweise durch einen Teachvorgang hinterlegt werden kann.

Erfindungsgemäß ist die Spann-Ausgangsstellung der Spannelemente derart gewählt, dass eine Kraftbeaufschlagung des einzuspannenden Werkstücks durch die Spannelemente mit Sicherheit ausgeschlossen ist. Dies ist gewährleistet, weil zwischen den in die Spann-Ausgangs-stellung bewegten Spannelementen einerseits und dem einzuspannenden Werkstück andererseits ein Spiel besteht. Eine entsprechende Spann-Ausgangsstellung wird für die Spannelemente insbesondere in Fällen gewählt, in denen besonders empfindliche Werkstücke, beispielsweise dünnwandige und folglich leicht deformierbare Rohre einzuspannen sind.

Da wenigstens eines der beiden einander gegenüberliegenden Spannelemente in der Spann-Ausgangsstellung einen Abstand von dem einzuspannenden Werkstück einhält, kann die Spann-Ausgangsstellung der Spannelemente verhältnismäßig grob eingestellt werden und zumindest in engen Grenzen variieren. Die Steuerung der Bewegung der Spannelemente in die Spann-Ausgangsstellung kann folglich mit verhältnismäßig geringem Aufwand durchgeführt werden. Gleichwohl erforderlich ist eine exakte Erfassung der Spann-Ausgangsstellung der Spannelemente, nachdem die Spann-Ausgangs-stellung der Spannelemente die Basis für die Überführung der Spannelemente in den Funktionszustand bildet.

Die Spannelemente werden mittels des Stellantriebs der erfindungsgemäßen Spannvorrichtung ausgehend von der Spann-Ausgangsstellung aufeinander zu beaufschlagt und dadurch in den Funktionszustand überführt. Die Herstellung des Funktionszustandes erfolgt dadurch, dass die Spannelemente mittels des als Servoantrieb ausgebildeten Stellantriebes mit hoher Genauigkeit in eine dem Funktionszustand zugeordnete Funktionsstellung aufeinander zu bewegt werden. Auch in dieser letzten Phase ihrer Überführung in den Funktionszustand werden die Spannelemente durch den als Servoantrieb ausgebildeten Stellantrieb mit großer Positioniergenauigkeit angetrieben. Insbesondere kann mittels des als Servoantrieb ausgeführten Stellantriebs sichergestellt werden, dass sich die von den Spannelementen auf das einzuspannende Werkstück ausgeübten Einspannkräfte behutsam, d.h. kontinuierlich und verhältnismäßig langsam aufbauen. Eine Überbeanspruchung des einzuspannenden Werkstücks durch die Spannelemente wird auf diese Art und Weise funktionssicher vermieden.

Die beiden einander zugeordneten Spannelemente bilden ein Spannelementpaar und werden vorzugsweise gemeinschaftlich durch einen einzigen Antriebsmotor synchron und gegenläufig angetrieben.

Eine Automatisierung der erfindungsgemäßen Spannvorrichtung und des erfindungsgemäßen Verfahrens zum Positionieren von Werkstücken wird mittels des erfindungsgemäßen Computerprogramms realisiert. Das erfindungsgemäße Computerprogramm läuft auf einer numerischen Steuerungsvorrichtung der Spannvorrichtung ab, wobei die numerische Steuerungsvorrichtung den für die Spannelemente vorgesehenen Stellantrieb in adäquater Weise steuert.

Das erfindungsgemäße Computerprogramm wird abgestimmt auf den jeweiligen Anwendungsfall nach dem Verfahren gemäß Patentanspruch 12 erstellt. Dabei eingesetzt wird ein Computerprogrammprodukt wie es in Patentanspruch 13 beschrieben ist. Durch das Computerprogrammprodukt wird der Anwender insbesondere in die Lage versetzt, das Computerprogramm zur anwendungsbezogenen Steuerung der erfindungsgemäßen Spannvorrichtung und des erfindungsgemäßen Verfahrens zum Positionieren von Werkstücken vor Ort zu generieren.

Besondere Ausführungsarten der in den unabhängigen Patentansprüchen beschriebenen Erfindung ergeben sich aus den abhängigen Patentansprüchen 2 bis 8.

Um den Zeitbedarf für das Positionieren eines Werkstücks gegenüber der Bearbeitungseinrichtung zu minimieren, ist in bevorzugter Ausgestaltung der Erfindung vorgesehen, dass die Bewegung der beiden Spannelemente in die Spann-Ausgangsstellung mit höherer Geschwindigkeit ausgeführt wird als die Bewegung der Spannelemente von der Spann-Ausgangsstellung in die Funktionsstellung (Patentanspruch 2).

Für die Steuerung bzw. die Regelung des für die Spannelemente der erfindungsgemäßen Spannvorrichtung vorgesehenen Stellantriebs können unterschiedliche Parameter herangezogen werden. Gemäß Patentanspruch 3 weist der Stellantrieb der Spannelemente in vorteilhafter Ausgestaltung der erfindungsgemäßen Spannvorrichtung eine Steuerungsvorrichtung auf, welche den Stellantrieb zur Bewegung der Spannelemente in die Spann-Ausgangsstellung und/oder zur Überführung der Spannelemente in den Funktionszustand kraft- und/oder positionsabhängig steuert.

In einer Vielzahl von Anwendungsfällen ist das mittels der Spannvorrichtung eingespannte Werkstück gegenüber der Bearbeitungseinrichtung der zugehörigen Werkzeugmaschine zu bewegen. Vor diesem Hintergrund sieht die Erfindungsbauart nach Patentanspruch 4 vor, dass die Spannelemente der Spannvorrichtung an einer bewegbaren, vorzugsweise drehbaren, Tragstruktur vorgesehen sind.

Im Interesse einer konstruktiv einfachen Gestaltung der Gesamtanordnung ist dabei in weiterer bevorzugter Ausgestaltung der Erfindung vorgesehen, dass wenigstens ein Teil des Stellantriebs, insbesondere ein Servomotor des Stellantriebs, gemeinschaftlich mit den Spannelementen an der bewegbaren Tragstruktur vorgesehen ist (Patentansprüche 5, 6). Die betreffenden Komponenten des Stellantriebs, gegebenenfalls der oder die Servomotoren des Stellantriebs, sind in diesem Fall in unmittelbarer Nähe der zu betätigenden Spannelemente angeordnet. Die Tragstruktur bildet in dem letztgenannten Fall eine Baueinheit die neben der eigentlichen Einspanntechnik auch die zugehörige Antriebstechnik umfasst.

Aus mehrerlei Gründen ist es von Vorteil, dass der Stellantrieb im Falle einer weiteren Erfindungsbauart als pneumatischer Servoantrieb mit einem pneumatischen Servomotor ausgebildet ist, der insbesondere eine pneumatische Kolben-Zylinder-Einheit aufweist (Patentanspruch 7). Pneumatische Servomotoren, insbesondere pneumatische Kolben-Zylinder-Einheiten, haben sich in einer Vielzahl von Anwendungsfällen als exakt regelbare und robuste Antriebsaggregate bewährt. Die als Druckmedium benötigte Druckluft kann ohne Weiteres bereitgestellt werden und kann dem pneumatischen Servomotor auch in Fällen problemlos zugeführt werden, in denen der pneumatische Servomotor an einer bewegbaren Tragstruktur der erfindungsgemäßen Spannvorrichtung angeordnet ist und sich bei Betrieb der Spannvorrichtung relativ zu einem stationären Drucklufterzeuger bewegt.

Die Anordnung der pneumatischen Kolben-Zylinder-Einheit an der bewegbaren Tragstruktur der erfindungsgemäßen Spannvorrichtung empfiehlt sich insbesondere in Kombination mit einzelnen oder sämtlichen Komponenten zur Steuerung und Regelung der pneumatischen Kolben-Zylinder-Einheit. Befinden sich sowohl die pneumatische Kolben-Zylinder-Einheit als auch die zugehörige Steuerungs- und Regelungstechnik an der bewegbaren Tragstruktur der Spannvorrichtung, so sind die Weglängen zwischen den betreffenden Komponenten der Steuerungs- und/oder Regelungstechnik und der von diesen anzusteuernden bzw. zu regelnden Kolben-Zylinder-Einheit minimiert. Dadurch können beispielsweise Druckverluste weitgehend vermieden werden.

Gemäß Patentanspruch 8 ist in weiterer bevorzugter Ausgestaltung der Erfindung vorgesehen, dass eine numerische Steuerungsvorrichtung des Stellantriebs der erfindungsgemäßen Spannvorrichtung einen stellantriebsnahen und einen stellantriebsfernen Vorrichtungsteil aufweist. Der stellantriebsferne Vorrichtungsteil der numerischen Steuerungsvorrichtung definiert dabei wenigstens einen Betriebsmodus, nach welchem der stellantriebsnahe Vorrichtungsteil der numerischen Steuerungsvorrichtung den Stellantrieb zur Bewegung der Spannelemente der Spannvorrichtung in die Spann-Ausgangsstellung und/oder zur Überführung der Spannelemente in den Funktionszustand steuert. Die beschriebene Zweiteilung der numerischen Steuerungsvorrichtung des Stellantriebes ist erfindungsgemäß insbesondere in Fällen realisiert, in denen der oder die numerisch gesteuert zu regelnden Motoren des Stellantriebs gemeinschaftlich mit den Spannelementen an einer bewegbaren Tragstruktur angeordnet sind. In bevorzugter Ausgestaltung der Erfindung ist dann der stellantriebsnahe Vorrichtungsteil der numerischen Steuerungsvorrichtung des Stellantriebs gleichfalls an der bewegbaren Tragstruktur vorgesehen. Die bewegbare Tragstruktur ist folglich nicht nur mit den zum Einspannen von Werkstücken erforderlichen Apparaturen sondern darüber hinaus auch mit der für diese benötigten Steuerungs- bzw. Regelungsintelligenz ausgestattet. Der stellantriebsferne Vorrichtungsteil der numerischen Steuerungsvorrichtung ist in Fällen der beschriebenen Art bevorzugtermaßen abseits der bewegbaren Tragstruktur angeordnet. Die gesamte numerische Steuerungsvorrichtung des Stellantriebs der erfindungsgemäßen Stellvorrichtung kann in eine übergeordnete Maschinensteuerung der mit der Spannvorrichtung versehenen Werkzeugmaschine integriert sein. Als Betriebsmodi kann der stellantriebsferne Vorrichtungsteil der numerischen Steuerungsvorrichtung beispielsweise eine kraftgesteuerte oder eine weg- und somit positionsgesteuerte Betätigung der Spannelemente der Spannvorrichtung vorgeben. Auf der Grundlage der von dem stellantriebsfernen Vorrichtungsteil stammenden Vorgabe steuert der stellantriebsnahe Vorrichtungsteil der numerischen Steuerungsvorrichtung den für die Spannelemente vorgesehen Stellantrieb. Die Übermittlung der Steuerungssignale zwischen dem antriebsfernen und dem antriebsnahen Vorrichtungsteil der numerischen Steuerungsvorrichtung kann leitungsgebunden oder berührungslos unter Verwendung von Telemetriesystemen erfolgen.

Nachfolgend wird die Erfindung anhand beispielhafter schematischer Darstellungen näher erläutert. Es zeigen:
- Figur 1: eine perspektivische Ansicht einer Spannvorrichtung zum Positionieren von Rohren an einer Rohrbearbeitungsmaschine, mit einem vier Spannbacken umfassenden Spannfutter im Ausgangszustand,
- Figur 2: die Spannvorrichtung gemäß Figur 1 in der senkrechten Draufsicht,
- Figur 3: die Spannvorrichtung gemäß den Figuren 1 und 2 ohne Spannbacken,
- Figur 4: die Spannvorrichtung gemäß den Figuren 1 und 2 in der Ansicht in Richtung des Pfeils IV in Figur 1,
- Figur 5: die Spannvorrichtung gemäß den Figuren 1 und 2 in der Ansicht in Richtung des Pfeils V in Figur 1,
- Figur 6: die Spannvorrichtung gemäß den Figuren 1 und 2 in der Ansicht in Richtung des Pfeils VI in Figur 1 und
- Figur 7: die Spannvorrichtung gemäß den Figuren 1 bis 6 mit dem Spannfutter im Funktionszustand.

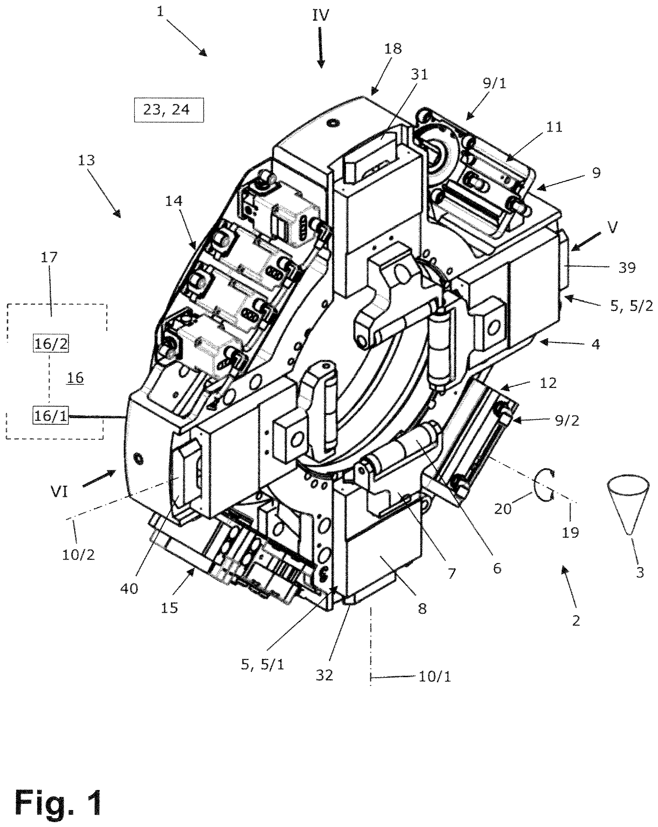

Gemäß Figur 1 ist eine Spannvorrichtung 1 Teil einer Werkzeugmaschine 2 für die Rohrbearbeitung. Die Spannvorrichtung 1 dient zum Positionieren von Rohren gegenüber einer Bearbeitungseinrichtung, im dargestellten Beispielsfall gegenüber einem Laserschneidkopf 3 der Werkzeugmaschine 2.

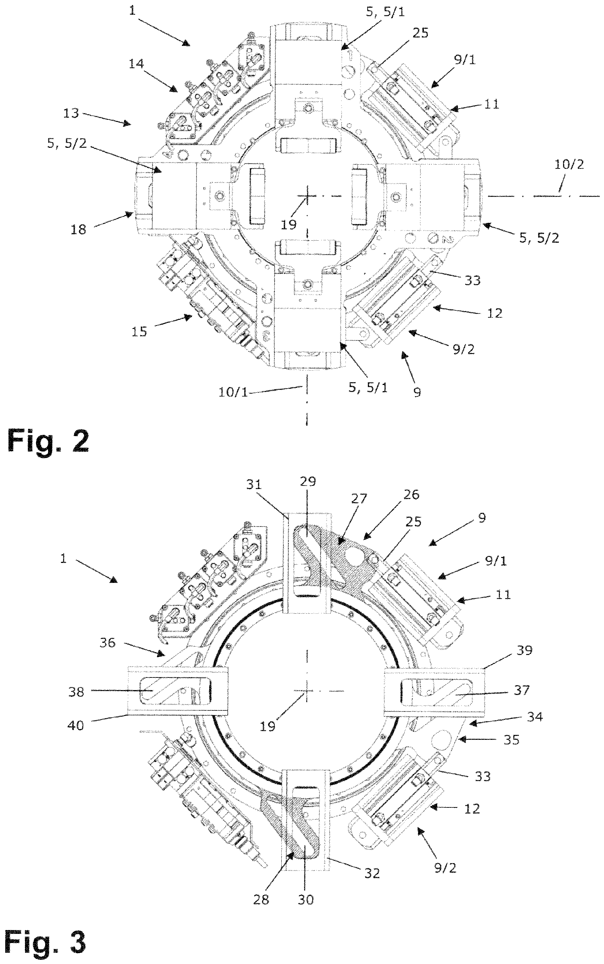

Zu diesem Zweck weist die Spannvorrichtung 1 ein Spannfutter 4 auf, das im vorliegenden Fall als Vierbackenfutter ausgeführt ist und dementsprechend als Spannelemente insgesamt vier Spannbacken 5 umfasst (siehe auch Figur 2). Die Spannbacken 5 liegen einander paarweise gegenüber und bilden folglich zwei Spannbackenpaare 5/1, 5/2. Jede der Spannbacken 5 umfasst einen rollenartigen Spannkörper 6, einen diesen drehbar lagernden Spannkörperhalter 7 sowie einen Führungsschlitten 8.

Mittels eines als Servoantrieb ausgebildeten Stellantriebs 9 sind die Spannbacken 5 des Spannbackenpaares 5/1 längs einer Spannachse 10/1 und die Spannbacken 5 des Spannbackenpaares 5/2 längs einer Spannachse 10/2 relativ zueinander zustellbar. Zur Betätigung der Spannbacken 5 des Spannbackenpaares 5/1 dient dabei eine Stellantriebseinheit 9/1 des Stellantriebs 9. Entsprechend ist eine Stellantriebseinheit 9/2 des Stellantriebs 9 zur Betätigung der Spannbacken 5 des Spannbackenpaares 5/2 vorgesehen. Die Wirkungslinien der von den Spannbacken 5 auf ein einzuspannendes Rohr ausgeübten Kräfte verlaufen in Richtung der Spannachsen 10/1, 10/2, wobei die von den Spannbacken 5 eines Spannbackenpaares 5/1, 5/2 auf das betreffende Rohr ausgeübten Kräfte einander entgegengerichtet sind und hinsichtlich Betrag und Wirkungslinie miteinander übereinstimmen.

Der Stellantrieb 9 ist als pneumatischer Servoantrieb ausgeführt. Als Antriebsmotor umfasst die Stellantriebseinheit 9/1 eine pneumatische Kolben-Zylinder-Einheit 11, die Stellantriebseinheit 9/2 eine pneumatische Kolben-Zylinder-Einheit 12.

Eine Steuer- und/oder Regelvorrichtung 13 des Stellantriebs 9 ist beiden Stellantriebseinheiten 9/1, 9/2 zugeordnet. Die Steuer- und/oder Regelvorrichtung 13 umfasst in herkömmlicher Weise eine Druckregeleinheit 14 sowie eine Ventileinheit 15. Gemeinsam sorgen die Druckregeleinheit 14 und die Ventileinheit 15 dafür, dass an den doppelt wirkenden Zylindern der Kolben-Zylinder-Einheiten 11, 12 in beiden Zylinderräumen der jeweils benötigte Druck ansteht.

Zu diesem Zweck werden die Druckregeleinheit 14 und die Ventileinheit 15 durch eine numerische Steuerungsvorrichtung 16 der Steuer- und/oder Regelvorrichtung 13 angesteuert. Die numerische Steuerungsvorrichtung 16 umfasst einen stellantriebsnahen Vorrichtungsteil 16/1 sowie einen stellantriebsfernen Vorrichtungsteil 16/2 und ist in eine übergeordnete numerische Maschinensteuerung 17 der Werkzeugmaschine 2 integriert.

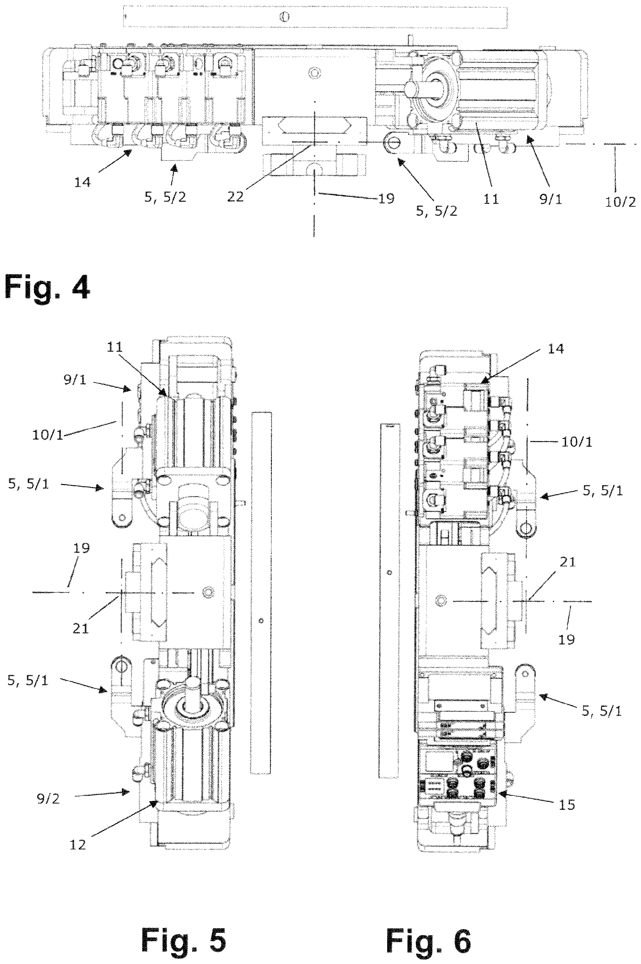

Während der stellantriebsnahe Vorrichtungsteil 16/1 der numerischen Steuerungsvorrichtung 16 gemeinsam mit den pneumatischen Kolben-Zylinder-Einheiten 11, 12, der Druckregeleinheit 14 und der Ventileinheit 15 des Stellantriebs 9 an einer Tragstruktur 18 der Spannvorrichtung 1 montiert ist, befindet sich der stellantriebsferne Vorrichtungsteil 16/2 abseits der Tragstruktur 18 und ist von dieser getrennt. Die Tragstruktur 18 ist um eine Drehachse 19 der Spannvorrichtung 1 in Richtung eines Doppelpfeils 20 drehbar. Auch die Drehbewegung der Tragstruktur 18 um die Drehachse 19 wird durch die numerische Maschinensteuerung 17 gesteuert. Längs der Drehachse 19 sind die Spannbackenpaare 5/1, 5/2 gegeneinander versetzt. Von beiden Spannachsen 10/1, 10/2 wird die Drehachse 19 der Tragstruktur 18 geschnitten. Dabei verläuft die Drehachse 19 der Tragstruktur 18 sowohl durch ein Spannzentrum 21 des Spannbackenpaares 5/1 (Figuren 5, 6) als auch durch ein Spannzentrum 22 des Spannbackenpaares 5/2 (Figur 4).

Ein in Figur 1 lediglich angedeuteter Druckerzeuger 23 einer Druckluftversorgung 24 des Stellantriebs 9 ist ebenfalls von der Tragstruktur 18 der Spannvorrichtung 1 räumlich getrennt. Bei Drehbewegungen der Tragstruktur 18 um die Drehachse 19 und auch bei gleichfalls möglichen translatorischen Bewegungen der Tragstruktur 18 längs der Drehachse 19 bleibt der Druckerzeuger 23 stationär. Über nicht gezeigte Drehdurchführungen herkömmlicher Bauart ist der Druckerzeuger 23 an die auf der Tragstruktur 18 aufsitzenden pneumatischen Komponenten des Stellantriebs 9 angeschlossen.

Figur 1 zeigt die Spannvorrichtung 1 im Ausgangszustand. Das Spannfutter 4 ist maximal geöffnet und die einander zugeordneten Spannbacken 5 der Spannbackenpaare 5/1, 5/2 sind längs der jeweiligen Spannachse 10/1, 10/2 maximal voneinander beabstandet. Zum Einspannen eines an dem Laserschneidkopf 3 der Werkzeugmaschine 2 zu bearbeitenden Rohres werden ausgehend von den Verhältnissen gemäß Figur 1 die Kolben-Zylinder-Einheiten 11, 12 des Stellantriebs 9 der Spannvorrichtung 1 geregelt betätigt.

Ausweislich Figur 3 ist eine Kolbenstange 25 der pneumatischen Kolben-Zylinder-Einheit 11 an einen ersten Stellring 26 angelenkt. Der erste Stellring 26 ist an der Tragstruktur 18 konzentrisch mit der Drehachse 19 um diese drehbar gelagert. Die Anlenkstelle der Kolbenstange 25 befindet sich an einer Kulisse 27 des ersten Stellrings 26. Der Kulisse 27 liegt an dem ersten Stellring 26 eine Kulisse 28 diametral gegenüber. Die Kulisse 27 weist einen stellringseitigen Kulissenschlitz 29, die Kulisse 28 einen stellringseitigen Kulissenschlitz 30 auf. In dem Kulissenschlitz 29 ist ein in den Figuren nicht dargestellter Steuerzapfen zwangsgeführt, der seinerseits von der Rückseite des Führungsschlittens 8 der in den Abbildungen oberen Spannbacke 5 des Spannbackenpaares 5/1 vorsteht. Entsprechend führt der Kulissenschlitz 30 der Kulisse 28 einen gleichfalls nicht dargestellten Steuerzapfen an der Rückseite des Führungsschlittens 8 der in den Abbildungen unteren Spannbacke 5 des Spannbackenpaares 5/1.

Wird die pneumatische Kolben-Zylinder-Einheit 11 geregelt betätigt und bewegt sich die Kolbenstange 25 der pneumatischen Kolben-Zylinder-Einheit dementsprechend in ihrer Längsrichtung, so wird der erste Stellring 26 einschließlich der daran vorgesehenen Kulissen 27, 28 um die Drehachse 19 der Tragstruktur 18 gedreht. Damit einher geht eine Verlagerung der an der Rückseite der Führungsschlitten 8 der Spannbacken 5 des Spannbackenpaares 5/1 vorgesehenen Steuerzapfen in den Kulissenschlitzen 29, 30. Daraus wiederum resultieren gegenläufige Bewegungen der Spannbacken 5 des Spannbackenpaares 5/1 längs der Spannachse 10/1. Bei diesen Bewegungen sind die Spannbacken 5 des Spannbackenpaares 5/1 an Führungsarmen 31, 32 der Tragstruktur 18 geführt.

Auf entsprechende Art und Weise werden die Spannbacken 5 des Spannbackenpaares 5/2 längs der Spannachse 10/2 zugestellt.

Die pneumatische Kolben-Zylinder-Einheit 12 ist zu diesem Zweck mit einer Kolbenstange 33 an einem zweiten Stellring 34 angelenkt, der seinerseits drehbeweglich auf der Tragstruktur 18 aufsitzt und mittels der pneumatischen Kolben-Zylinder-Einheit 12 um die Drehachse 19 der Spannvorrichtung 1 gedreht werden kann. Drehbewegungen des zweiten Stellrings 34 werden über an diesem vorgesehene Kulissen 35, 36 und über Steuerzapfen, die an der Rückseite der Führungsschlitten 8 der Spannbacken 5 des Spannbackenpaares 5/2 vorgesehen sind und in Kulissenschlitze 37, 38 der Kulissen 35, 36 eingreifen, in lineare gegenläufige Bewegungen der Spannbacken 5 des Spannbackenpaares 5/2 längs der Spannachse 10/2 umgesetzt. Zur Führung der Spannbacken 5 des Spannbackenpaares 5/2 längs der Spannachse 10/2 dienen Führungsarme 39, 40 der Tragstruktur 18.

Die Abläufe beim Einspannen eines gegenüber dem Laserschneidkopf 3 der Werkzeugmaschine 2 zu positionierenden Rohres sind im Einzelnen von dem jeweiligen Anwendungsfall abhängig.

Für die Betriebweise des Stellantriebs 9 sind dabei insbesondere die Wandstärke und die daraus resultierende Wandsteifigkeit des einzuspannenden Rohres und/oder dessen Querschnittsabmessungen maßgebend.

In Abhängigkeit von der Wandsteifigkeit des einzuspannenden Rohres definiert der stellantriebsferne Vorrichtungsteil 16/2 der numerischen Steuerungsvorrichtung 16 des Stellantriebs 9 einen Betriebsmodus für den Stellantrieb 9, im Einzelnen die pneumatischen Kolben-Zylinder-Einheiten 11, 12. Nach diesem Betriebsmodus wird der Stellantrieb 9 bzw. werden die Kolben-Zylinder-Einheiten 11, 12 von dem stellantriebsnahen Vorrichtungsteil 16/1 der numerischen Steuerungsvorrichtung 16 gesteuert. Die in diesem Zusammenhang erforderliche Übertragung von Steuersignalen zwischen dem stellantriebsfernen Vorrichtungsteil 16/2 und dem stellantriebsnahen Vorrichtungsteil 16/1 der numerischen Steuerungsvorrichtung 16 wird in dem dargestellten Beispielsfall mit Hilfe eines herkömmlicher Telemetriesystems und somit berührungslos realisiert.

Handelt es sich bei dem an der Spannvorrichtung 1 einzuspannenden Werkstück um ein dünnwandiges und folglich leicht deformierbares Rohr, so gibt die numerische Maschinensteuerung 17 bzw. der stellantriebsferne Vorrichtungsteil 16/2 der numerischen Steuerungsvorrichtung 16 für den Stellantrieb 9 den Betriebsmodus "Soft Touch" vor. In diesem Betriebsmodus kann der Stellantrieb 9 zur Überführung der Spannbacken 5 der Spannbackenpaare 5/1, 5/2 in den Funktionszustand teilweise weg- und somit positionsgesteuert sein.

Beginnend mit dem Ausgangszustand des Spannfutters 4 gemäß Figur 1 werden im Betriebsmodus "Soft Touch" die Druckregeleinheit 14 und die Ventileinheit 15 der Steuer- und Regelvorrichtung 13 des Stellantriebs 9 durch den stellantriebsnahen Vorrichtungsteil 16/1 der numerischen Steuerungsvorrichtung 16 zunächst derart angesteuert, dass an den pneumatischen Kolben-Zylinder-Einheiten 11, 12 der maximale Druck anliegt und dementsprechend die Kolbenstange 25 der pneumatischen Kolben-Zylinder-Einheit 11 und die Kolbenstange 33 der pneumatischen Kolben-Zylinder-Einheit 12 ausgehend von den Verhältnissen gemäß Figur 3 mit maximaler Geschwindigkeit aus den jeweiligen Zylindern ausfahren. Infolgedessen treiben die pneumatischen Kolben-Zylinder-Einheiten 11, 12 die Spannbacken 5 der ihnen zugeordneten Spannbackenpaare 5/1, 5/2 zunächst mit maximaler Geschwindigkeit in Richtung auf die Spannzentren 21, 22 an. Die schnelle Bewegung der Spannbacken 5 der Spannbackenpaare 5/1, 5/2 endet, sobald die Spannbacken 5 der einzelnen Spannbackenpaare 5/1, 5/2 längs der Spannachsen 10/1, 10/2 eine in dem stellantriebsnahen Vorrichtungsteil 16/1 der numerischen Steuerungsvorrichtung 16 beispielsweise durch einen Teachvorgang hinterlegte und von den Querschnittsabmessungen des einzuspannenden Rohres längs der Spannachsen 10/1, 10/2 abhängige Position erreicht haben. Dass diese Spannbackenpositionen erreicht sind, wird mittels nicht dargestellter Wegmesssysteme herkömmlicher Bauart festgestellt, die an den pneumatischen Kolben-Zylinder-Einheiten 11, 12 vorgesehen sind und dort die Ausfahrlänge der Kolbenstangen 25, 33 gegenüber dem jeweils zugehörigen Zylinder messen.

Bei der Position, in die sich die Spannbacken 5 der Spannbackenpaare 5/1, 5/2 am Ende ihrer schnellen Bewegung längs der Spannachse 10/1 bzw. der Spannachse 10/2 aufeinander zu bewegt haben, handelt es sich um die jeweilige Spann-Ausgangsstellung.

Nehmen die Spannbacken 5 der Spannbackenpaare 5/1, 5/2 ihre Spann-Ausgangsstellung ein, so sind sie in dem dargestellten Beispielsfall längs der Spannachsen 10/1, 10/2 noch geringfügig von der Außenseite des einzuspannenden Rohres beabstandet. Die Spannbackenbewegung in die Spann-Ausgangsstellung ist ausschließlich weg- bzw. positionsgesteuert.

Ist die Spann-Ausgangsstellung der Spannbacken 5 derart gewählt, dass zwischen dem einzuspannenden Werkstück einerseits und den Spannbacken 5 andererseits längs der Spannachsen 10/1, 10/2 noch ein geringfügiges Spiel besteht, so wird ausschließlich die dann folgende letzte Phase der Überführung der Spannbacken 5 in den Funktionszustand kraftgesteuert.

Nachdem die Spannbacken 5 die jeweils vorgegebene Spann-Ausgangsstellung erreicht haben, wird an den pneumatischen Kolben-Zylinder-Einheiten 11, 12 der Druck langsam und kontinuierlich erhöht. In Folge der Erhöhung des an den pneumatischen Kolben-Zylinder-Einheiten 11, 12 anliegenden Druckes bewegen sich die Spannbacken 5 der einzelnen Spannbackenpaare 5/1, 5/2 gegenläufig längs der Spannachsen 10/1, 10/2, bis sie an der Außenseite des einzuspannenden Rohres zur Anlage kommen. Eine fortgesetzte Druckerhöhung an den pneumatischen Kolben-Zylinder-Einheiten 11, 12 bewirkt eine Erhöhung der von den nun im Wesentlichen ortsfesten Spannbacken 5 auf das Rohr ausgeübten Kräfte bis hin zum Erreichen der Einspannkraft, deren Betrag in Abhängigkeit von der Steifigkeit des einzuspannenden Rohres in dem stellantriebsnahen Vorrichtungsteil 16/1 der numerischen Steuerungsvorrichtung 16 hinterlegt ist. Mit Erreichen der Einspannkraft bzw. mit Erreichen des der Einspannkraft zugeordneten Druckes an den pneumatischen Kolben-Zylinder-Einheiten 11, 12 befinden sich die Spannbacken 5 im Funktionszustand und der Stellantrieb 9 der Spannvorrichtung 1 wird stillgesetzt.

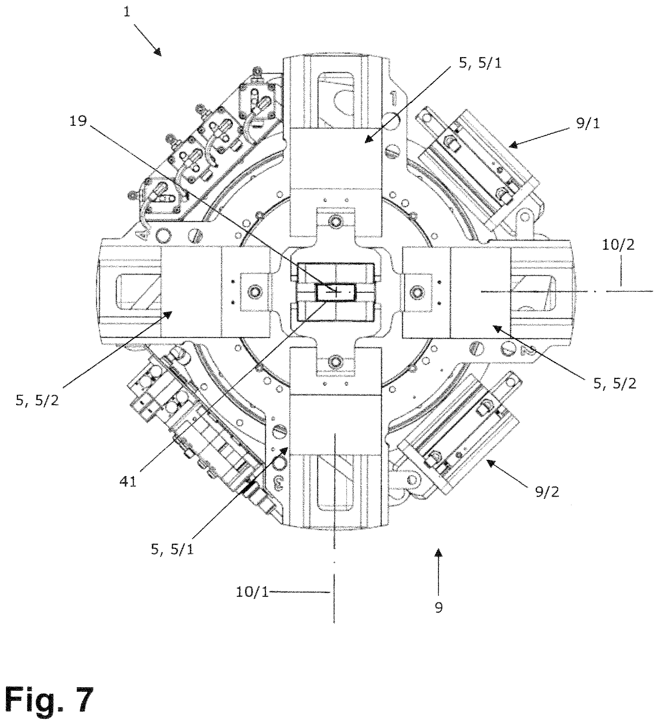

Mit in den Funktionszustand überführten Spannbacken 5 ist die Spannvorrichtung 1 in Figur 7 gezeigt. Die Spannbacken 5 beider Spannbackenpaare 5/1, 5/2 beaufschlagen ein angedeutetes Rohr 41 jeweils mit der vorgegebenen Einspannkraft. Das Rohr 41 besitzt einen punktsymmetrischen Rechteckquerschnitt, durch dessen Symmetriezentrum die Rohrlängsachse verläuft. Die Rohrlängsachse fällt mit der Drehachse 19 der Spannvorrichtung 1 zusammen.

## Patentansprüche

1. Spannvorrichtung zum Positionieren von Werkstücken (41) gegenüber einer Bearbeitungseinrichtung (3) einer Werkzeugmaschine (2) zum Bearbeiten von Werkstücken (41),
• mit zwei Spannelementen (5),
• mit einem für die Spannelemente (5) vorgesehenen und als Servoantrieb ausgebildeten Stellantrieb (9), welcher wenigstens ein Spannelement (5) relativ zu dem anderen Spannelement (5) bewegt und welcher dadurch die Spannelemente (5) relativ zueinander aufeinander zu bewegt und in einen Funktionszustand überführt, in welchem die Spannelemente (5) bei Anordnung eines Werkstücks (41) zwischen den Spannelementen (5) das Werkstück (41) zwischen sich einspannen, indem die Spannelemente (5) einander an dem Werkstück (41) gegenüberliegen und das Werkstück (41) an der Außenseite jeweils mit einer Einspannkraft längs einer Wirkungslinie (10/1, 10/2) der jeweiligen Einspannkraft kraftbeaufschlagen sowie
• mit einer numerischen Steuerungsvorrichtung (16) für den Stellantrieb (9),
wobei der Stellantrieb (9) die Spannelemente (5) bei der Überführung in den Funktionszustand zunächst relativ zueinander in eine Spann-Ausgangsstellung aufeinander zu bewegt und ausgehend von der Spann-Ausgangsstellung aufeinander zu beaufschlagt und dadurch relativ zueinander in eine dem Funktionszustand der Spannelemente (5) zugeordnete Funktionsstellung aufeinander zu bewegt und wobei die Spann-Ausgangsstellung der Spannelemente (5) vorzugsweise durch einen Teachvorgang in der numerischen Steuerungsvorrichtung (16) des Stellantriebs (9) hinterlegt ist, **dadurch gekennzeichnet, dass** der Stellantrieb (9) die Spannelemente (5) relativ zueinander in eine Spann-Ausgangsstellung aufeinander zu bewegt, in welcher die Spannelemente (5) bei Anordnung eines Werkstücks (41) zwischen den Spannelementen (5) das Werkstück (41) an der Außenseite jeweils nicht kraftbeaufschlagen, wobei zwischen den in die Spann-Ausgangsstellung bewegten Spannelementen (5) einerseits und dem zwischen den Spannelementen (5) angeordneten Werkstück (41) andererseits längs der Wirkungslinien (10/1, 10/2) der Einspannkräfte ein Spiel besteht.

2. Spannvorrichtung nach Anspruch 1, **dadurch gekennzeichnet, dass** die Geschwindigkeit, mit welcher der Stellantrieb (9) die Spannelemente (5) in die Spann-Ausgangsstellung bewegt, betragsmäßig größer ist als die Geschwindigkeit, mit welcher der Stellantrieb (9) die Spannelemente (5) ausgehend von der Spann-Ausgangsstellung in die Funktionsstellung bewegt.

3. Spannvorrichtung nach einem der vorhergehenden Ansprüche, **dadurch gekennzeichnet, dass** der Stellantrieb (9) eine Steuer- und/oder Regeleinrichtung (13) aufweist,
• mittels derer der Stellantrieb (9) zur Bewegung der Spannelemente (5) in die Spann-Ausgangsstellung und/oder zur Überführung der Spannelemente (5) in den Funktionszustand in Abhängigkeit von dem Betrag der Kraft steuer- und/ oder regelbar ist, mit welcher die Spannelemente (5) das Werkstück (41) längs der Wirkungslinien (10/1, 10/2) der Einspannkräfte kraftbeaufschlagen und/oder
• mittels derer der Stellantrieb (9) zur Bewegung der Spannelemente (5) in die Spann-Ausgangsstellung und/oder zur Überführung der Spannelemente (5) in den Funktionszustand in Abhängigkeit von der Position steuer- und/oder regelbar ist, welche die Spannelemente (5) bei ihrer Relativbewegung einnehmen.

4. Spannvorrichtung nach einem der vorhergehenden Ansprüche, **dadurch gekennzeichnet, dass** die Spannelemente (5) an einer Tragstruktur (18) vorgesehen sind, die bewegbar, vorzugsweise um eine Drehachse (19) drehbar, ist.

5. Spannvorrichtung nach Anspruch 4, **dadurch gekennzeichnet, dass** wenigstens ein Teil des Stellantriebs (9) gemeinschaftlich mit den Spannelementen (5) an der bewegbaren Tragstruktur (18) vorgesehen ist.

6. Spannvorrichtung nach Anspruch 5, **dadurch gekennzeichnet, dass** als Teil des Stellantriebs (9) ein Servomotor des Stellantriebs (9) gemeinschaftlich mit den Spannelementen (5) an der bewegbaren Tragstruktur (18) vorgesehen ist.

7. Spannvorrichtung nach einem der vorhergehenden Ansprüche, **dadurch gekennzeichnet, dass** der Stellantrieb (9) als pneumatischer Servoantrieb mit einem pneumatischen Servomotor ausgebildet ist und der pneumatische Servomotor vorzugsweise eine pneumatische Kolben-Zylinder-Einheit (11, 12) aufweist.

8. Spannvorrichtung nach einem der vorhergehenden Ansprüche, **dadurch gekennzeichnet, dass** die numerische Steuerungsvorrichtung (16) des Stellantriebs (9) einen stellantriebsnahen Vorrichtungsteil (16/1) und einen stellantriebsfernen Vorrichtungsteil (16/2) aufweist, wobei der stellantriebsferne Vorrichtungsteil (16/2) der numerischen Steuerungsvorrichtung (16) wenigstens einen Betriebsmodus definiert, nach welchem der stellantriebsnahe Vorrichtungsteil (16/1) der numerischen Steuerungsvorrichtung (16) den Stellantrieb (9) zur Bewegung der Spannelemente (5) in die Spann-Ausgangsstellung und/oder zur Überführung der Spannelemente (5) in den Funktionszustand steuert.

9. Werkzeugmaschine zum Bearbeiten von Werkstücken, mit einer Bearbeitungseinrichtung (3) zum Bearbeiten von Werkstücken (41) sowie mit einer Spannvorrichtung (1), mittels derer ein Werkstück (41) gegenüber der Bearbeitungseinrichtung (3) positionierbar ist, **dadurch gekennzeichnet, dass** die Spannvorrichtung (1) nach einem der vorhergehenden Ansprüche ausgebildet ist.

10. Verfahren zum Positionieren von Werkstücken (41) gegenüber einer Bearbeitungseinrichtung (3) einer Werkzeugmaschine (2) zum Bearbeiten von Werkstücken (41), durchgeführt mit einer Spannvorrichtung (1) nach einem der Ansprüche 1 bis 8, wobei die Spannelemente (5) mittels des als Servoantrieb ausgebildeten und eine numerische Steuerungsvorrichtung (16) aufweisenden Stellantriebs (9) relativ zueinander aufeinander zu bewegt und dadurch in einen Funktionszustand überführt werden, in welchem die Spannelemente (5) bei Anordnung eines Werkstückes (41) zwischen den Spannelementen (5) das Werkstück (41) zwischen sich einspannen, indem die Spannelemente (5) einander an dem Werkstück (41) gegenüberliegen und das Werkstück (41) an der Außenseite jeweils mit einer Einspannkraft längs einer Wirkungslinie (10/1, 10/2) der jeweiligen Einspannkraft kraftbeaufschlagen, wobei die Spannelemente (5) bei der Überführung in den Funktionszustand mittels des Stellantriebs (9) zunächst relativ zueinander in eine Spann-Ausgangsstellung aufeinander zu bewegt werden und ausgehend von der Spann-Ausgangsstellung aufeinander zu beaufschlagt und dadurch relativ zueinander in eine dem Funktionszustand der Spannelemente zugeordnete Funktionsstellung aufeinander zu bewegt werden und wobei die Spann-Ausgangsstellung der Spannelemente (5) vorzugsweise durch einen Teachvorgang in der numerischen Steuerungsvorrichtung (16) des Stellantriebs (9) hinterlegt ist, **dadurch gekennzeichnet, dass** die Spannelemente (5) derart in die Spann-Ausgangsstellung bewegt werden, dass die Spannelemente (5) bei Anordnung eines Werkstücks (41) zwischen den Spannelementen (5) das Werkstück (41) an der Außenseite jeweils nicht kraftbeaufschlagen, wobei zwischen den in die Spann-Ausgangsstellung bewegten Spannelementen (5) einerseits und dem zwischen den Spannelementen (5) angeordneten Werkstück (41) andererseits längs der Wirkungslinien (10/1, 10/2) der Einspannkräfte ein Spiel besteht.

11. Computerprogramm zum Betreiben einer Spannvorrichtung (1) nach einem der Ansprüche 1 bis 8, **dadurch gekennzeichnet, dass** das Computerprogramm für den für die Spannelemente (5) vorgesehenen Stellantrieb (9) Steuerbefehle umfasst, welche bewirken, dass das Verfahren nach Anspruch 10 abfäuft, wenn das Computerprogramm auf einer numerischen Steuerungsvorrichtung (16) der Spannvorrichtung (1) abläuft.

12. Verfahren zum Erstellen eines Computerprogramms nach Anspruch 11, **dadurch gekennzeichnet, dass** Steuerbefehle für den für die Spannelemente (5) vorgesehenen Stellantrieb (9) erzeugt werden, welche bewirken, dass das Verfahren nach Anspruch 10 abläuft, wenn das Computerprogramm auf einer numerischen Steuerungsvorrichtung der Spannvorrichtung (16) abläuft.

13. Computerprogrammprodukt, **dadurch gekennzeichnet, dass** das Computerprogrammprodukt Kodierungsmittel aufweist, die zum Durchführen aller Schritte des Verfahrens nach Anspruch 12 angepasst sind, wenn das Computerprogrammprodukt auf einer Datenverarbeitungsanlage betrieben wird.

## Claims

1. Clamping device for positioning workpieces (41) with respect to a processing device (3) of a machine tool (2) for processing workpieces (41),
• having two clamping elements (5),
• having a positioning drive (9) which is provided for the clamping elements (5) and which is configured as a servo drive and which moves at least one clamping element (5) relative to the other clamping element (5) and which thereby moves the clamping elements (5) relative to each other towards each other and into an operating state in which the clamping elements (5) when a workpiece (41) is arranged between the clamping elements (5) clamp the workpiece (41) between them by the clamping elements (5) facing each other on the workpiece (41) and applying force to the workpiece (41) at the outer side thereof in each case with a clamping force along a line of action (10/1, 10/2) of the respective clamping force, and
• having a numerical control device (16) for the positioning drive (9),
wherein the positioning drive (9) when moving the clamping elements (5) into the operating state first moves the clamping elements (5) relative to each other towards each other into a clamping start position and starting from the clamping start position acts on them in the direction towards each other and thereby moves them relative to each other towards each other into an operating position which is associated with the operating state of the clamping elis associated with the operating state of the clamping elements (5), and wherein the clamping start position of the clamping elements (5) is stored, preferably by means of a teaching operation, in the numerical control device (16) of the positioning drive (9), **characterised in that** the positioning drive (9) moves the clamping elements (5) relative to each other towards each other into a clamping start position in which the clamping elements (5) when a workpiece (41) is arranged between the clamping elements (5) do not apply force to the workpiece (41) at the outer side thereof in each case, wherein between the clamping elements (5) which are moved into the clamping start position, on the one hand, and the workpiece (41) which is arranged between the clamping elements (5), on the other hand, there is play along the lines of action (10/1, 10/2) of the clamping forces.

2. Clamping device according to claim 1, **characterised in that** the speed at which the positioning drive (9) moves the clamping elements (5) into the clamping start position is higher in terms of value than the speed at which the positioning drive (9) moves the clamping elements (5) starting from the clamping start position into the operating position.

3. Clamping device according to either of the preceding claims, **characterised in that** the positioning drive (9) has a control and/or regulation device (13),
• by means of which the positioning drive (9) can be controlled and/or regulated in order to move the clamping elements (5) into the clamping start position and/or to move the clamping elements (5) into the operating state as a function of the value of the force with which the clamping elements (5) apply force to the workpiece (41) along the lines of action (10/1, 10/2) of the clamping forces, and/or
• by means of which the positioning drive (9) can be controlled and/or regulated in order to move the clamping elements (5) into the clamping start position and/or to move the clamping elements (5) into the operating state as a function of the position which the clamping elements (5) assume during their relative movement.

4. Clamping device according to any one of the preceding claims, **characterised in that** the clamping elements (5) are provided on a carrier structure (18) which can be moved, preferably rotated about a rotation axis (19).

5. Clamping device according to claim 4, **characterised in that** at least a portion of the positioning drive (9) is provided together with the clamping elements (5) on the movable carrier structure (18).

6. Clamping device according to claim 5, **characterised in that** a servo motor of the positioning drive (9) is provided together with the clamping elements (5) on the movable carrier structure (18) as a portion of the positioning drive (9).

7. Clamping device according to any one of the preceding claims, **characterised in that** the positioning drive (9) is configured as a pneumatic servo drive with a pneumatic servo motor and the pneumatic servo motor preferably has a pneumatic piston/cylinder unit (11, 12).

8. Clamping device according to any one of the preceding claims, **characterised in that** the numerical control device (16) of the positioning drive (9) has a device portion (16/1) which is close to the positioning drive and a device portion (16/2) which is remote from the positioning drive, wherein the device portion (16/2) of the numerical control device (16) remote from the positioning drive defines at least one operating mode according to which the device portion (16/1) of the numerical control device (16) close to the positioning drive controls the positioning drive (9) in order to move the clamping elements (5) into the clamping start position and/or to move the clamping elements (5) into the operating state.

9. Machine tool for processing workpieces, having a processing device (3) for processing workpieces (41) and having a clamping device (1) by means of which a workpiece (41) can be positioned with respect to the processing device (3), **characterised in that** the clamping device (1) is configured according to any one of the preceding claims.

10. Method for positioning workpieces (41) with respect to a processing device (3) of a machine tool (2) for processing workpieces (41), carried out by means of a clamping device (1) according to any one of claims 1 to 8, wherein the clamping elements (5) are moved, by means of the positioning drive (9) which is configured as a servo drive and which has a numerical control device (16), relative to each other towards each other and are thereby moved into an operating state in which the clamping elements (5) when a workpiece (41) is arranged between the clamping elements (5) clamp the workpiece (41) between them by the clamping elements (5) facing each other on the workpiece (41) and applying force to the workpiece (41) at the outer side thereof in each case with a clamping force along a line of action (10/1, 10/2) of the respective clamping force, wherein the clamping elements (5) when moved into the operating state by means of the positioning drive (9) are first moved relative to each other towards each other into a clamping start position and starting from the clamping start position are acted on in the direction towards each other and are thereby moved relative to each other towards each other into an operating position which is associated with the operating state of the clamping elements, and wherein the clamping start position of the clamping elements (5) is stored, preferably by means of a teaching operation, in the numerical control device (16) of the positioning drive (9), **characterised in that** the clamping elements (5) are moved in such a manner into the clamping start position that the clamping elements (5) when a workpiece (41) is arranged between the clamping elements (5) do not apply force to the workpiece (41) at the outer side thereof in each case, wherein between the clamping elements (5) which are moved into the clamping start position, on the one hand, and the workpiece (41) which is arranged between the clamping elements (5), on the other hand, there is play along the lines of action (10/1, 10/2) of the clamping forces.

11. Computer programme for operating a clamping device (1) according to any one of claims 1 to 8, **characterised in that** the computer programme for the positioning drive (9) which is provided for the clamping elements (5) comprises control commands which result in the method according to claim 10 being carried out when the computer programme runs on a numerical control device (16) of the clamping device (1).

12. Method for producing a computer programme according to claim 11, **characterised in that** control commands for the positioning drive (9) which is provided for the clamping elements (5) are produced and result in the method according to claim 10 being carried out when the computer programme runs on a numerical control device of the clamping device (16).

13. Computer programme product, **characterised in that** the computer programme product comprises encoding means which are adapted for carrying out all the steps of the method according to claim 12 when the computer programme product is operated on a data processing system.

## Revendications

1. Dispositif de serrage destiné à positionner des pièces à travailler (41) par rapport à un équipement d'usinage (3) d'une machine-outil (2) pour l'usinage de pièces à travailler (41),
- avec deux éléments de serrage (5),
- avec un actionneur (9), prévu pour les éléments de serrage (5) et réalisé sous forme de servo-entraînement, qui déplace au moins un élément de serrage (5) par rapport à l'autre élément de serrage (5) et qui rapproche ainsi les éléments de serrage (5) l'un de l'autre et les transfère dans un état de fonctionnement dans lequel les éléments de serrage (5), lorsqu'une pièce à travailler (41) est disposée entre les éléments de serrage (5), serrent entre eux la pièce à travailler (41), par le fait que les éléments de serrage (5) font face l'un l'autre sur la pièce à travailler (41) et sollicitent respectivement en force la pièce à travailler (41) sur le côté extérieur avec une force de serrage le long d'une ligne d'action (10/1, 10/2) de la force de serrage respective,
- et avec un dispositif de commande numérique (16) pour l'actionneur (9),
sachant que l'actionneur (9), lors du transfert dans l'état de fonctionnement, rapproche d'abord les éléments de serrage (5) l'un de l'autre dans une position initiale de serrage et, en partant de la position initiale de serrage, les sollicite l'un vers l'autre et les rapproche ainsi l'un de l'autre dans une position fonctionnelle associée à l'état de fonctionnement des éléments de serrage (5), et sachant que la position initiale de serrage des éléments de serrage (5) est enregistrée, de préférence par un processus d'apprentissage, dans le dispositif de commande numérique (16) de l'actionneur (9), **caractérisé en ce que** l'actionneur (9) rapproche les éléments de serrage (5) l'un de l'autre dans une position initiale de serrage dans laquelle les éléments de serrage (5), lorsqu'une pièce à travailler (41) est disposée entre les éléments de serrage (5), ne sollicitent pas respectivement en force la pièce à travailler (41) sur le côté extérieur, sachant qu'il existe un jeu le long les lignes d'action (10/1, 10/2) des forces de serrage entre d'une part les éléments de serrage (5) déplacés dans la position initiale de serrage et d'autre part la pièce à travailler (41) disposée entre les éléments de serrage (5).

2. Dispositif de serrage selon la revendication 1, **caractérisé en ce que** la vitesse à laquelle l'actionneur (9) déplace les éléments de serrage (5) dans la position initiale de serrage est d'un montant supérieur à la vitesse à laquelle l'actionneur (9) déplace les éléments de serrage (5) dans la position fonctionnelle à partir de la position initiale de serrage.

3. Dispositif de serrage selon l'une des revendications précédentes, **caractérisé en ce que** l'actionneur (9) présente un équipement (13) de commande et/ou de réglage,
- au moyen duquel l'actionneur (9) peut être commandé et/ou réglé afin de déplacer les éléments de serrage (5) dans la position initiale de serrage et/ou afin de transférer les éléments de serrage (5) dans l'état de fonctionnement en fonction du montant de la force avec laquelle les éléments de serrage (5) sollicitent en force la pièce à travailler (41) le long les lignes d'action (10/1, 10/2) des forces de serrage,
- et/ou au moyen duquel l'actionneur (9) peut être commandé et/ou réglé afin de déplacer les éléments de serrage (5) dans la position initiale de serrage et/ou afin de transférer les éléments de serrage (5) dans l'état de fonctionnement en fonction de la position que prennent les éléments de serrage (5) lors de leur déplacement relatif.

4. Dispositif de serrage selon l'une des revendications précédentes, **caractérisé en ce que** les éléments de serrage (5) sont prévus sur une structure porteuse (18) qui est mobile, de préférence rotative autour d'un axe de rotation (19).

5. Dispositif de serrage selon la revendication 4, **caractérisé en ce qu'**au moins une partie de l'actionneur (9) est prévue conjointement avec les éléments de serrage (5) sur la structure porteuse mobile (18).

6. Dispositif de serrage selon la revendication 5, **caractérisé en ce que**, comme partie de l'actionneur (9), un servomoteur de l'actionneur (9) est prévu conjointement avec les éléments de serrage (5) sur la structure porteuse mobile (18).

7. Dispositif de serrage selon l'une des revendications précédentes, **caractérisé en ce que** l'actionneur (9) est réalisé sous forme de servo-entraînement pneumatique avec un servomoteur pneumatique, et le servomoteur pneumatique présente de préférence une unité piston-cylindre pneumatique (11, 12).

8. Dispositif de serrage selon l'une des revendications précédentes, **caractérisé en ce que** le dispositif de commande numérique (16) de l'actionneur (9) présente une partie de dispositif (16/1) proche de l'actionneur et une partie de dispositif (16/2) éloignée de l'actionneur, sachant que la partie de dispositif (16/2) éloignée de l'actionneur du dispositif de commande numérique (16) définit au moins un mode opératoire suivant lequel la partie de dispositif (16/1) proche de l'actionneur du dispositif de commande numérique (16) commande l'actionneur (9) pour le déplacement des éléments de serrage (5) dans la position initiale de serrage et/ou pour le transfert des éléments de serrage (5) dans l'état de fonctionnement.

9. Machine-outil pour l'usinage de pièces à travailler, avec un équipement d'usinage (3) pour usiner des pièces à travailler (41) et avec un dispositif de serrage (1) au moyen duquel une pièce à travailler (41) peut être positionnée par rapport à l'équipement d'usinage (3), **caractérisée en ce que** le dispositif de serrage (1) est configuré selon l'une des revendications précédentes.

10. Procédé de positionnement de pièces à travailler (41) par rapport à un équipement d'usinage (3) d'une machine-outil (2) pour l'usinage de pièces à travailler (41), exécuté au moyen d'un dispositif de serrage (1) selon l'une des revendications 1 à 8, sachant que les éléments de serrage (5) sont, au moyen de l'actionneur (9) réalisé sous forme de servo-entraînement et présentant un dispositif de commande numérique (16), rapprochés l'un de l'autre et ainsi transférés dans un état de fonctionnement dans lequel les éléments de serrage (5), lorsqu'une pièce à travailler (41) est disposée entre les éléments de serrage (5), serrent entre eux la pièce à travailler (41), par le fait que les éléments de serrage (5) font face l'un l'autre sur la pièce à travailler (41) et sollicitent respectivement en force la pièce à travailler (41) sur le côté extérieur avec une force de serrage le long d'une ligne d'action (10/1, 10/2) de la force de serrage respective, sachant que les éléments de serrage (5), lors du transfert dans l'état de fonctionnement, au moyen de l'actionneur (9), sont d'abord rapprochés l'un de l'autre dans une position initiale de serrage et, en partant de la position initiale de serrage, sollicités l'un vers l'autre et ainsi rapprochés l'un de l'autre dans une position fonctionnelle associée à l'état de fonctionnement des éléments de serrage, et sachant que la position initiale de serrage des éléments de serrage (5) est enregistrée, de préférence par un processus d'apprentissage, dans le dispositif de commande numérique (16) de l'actionneur (9), **caractérisé en ce que** les éléments de serrage (5) sont déplacés dans la position initiale de serrage de telle sorte que les éléments de serrage (5), lorsqu'une pièce à travailler (41) est disposée entre les éléments de serrage (5), ne sollicitent pas respectivement en force la pièce à travailler (41) sur le côté extérieur, sachant qu'il existe un jeu le long les lignes d'action (10/1, 10/2) des forces de serrage entre d'une part les éléments de serrage (5) déplacés dans la position initiale de serrage et d'autre part la pièce à travailler (41) disposée entre les éléments de serrage (5).

11. Programme informatique pour opérer un dispositif de serrage (1) selon l'une des revendications 1 à 8, **caractérisé en ce que** le programme informatique comprend des ordres de commande pour l'actionneur (9) prévu pour les éléments de serrage (5), ordres qui ont pour effet que le procédé selon la revendication 10 se déroule lorsque le programme informatique se déroule sur un dispositif de commande numérique (16) du dispositif de serrage (1).

12. Procédé d'élaboration d'un programme informatique selon la revendication 11, **caractérisé en ce que** des ordres de commande sont créés pour l'actionneur (9) prévu pour les éléments de serrage (5), ordres qui ont pour effet que le procédé selon la revendication 10 se déroule lorsque le programme informatique se déroule sur un dispositif de commande numérique du dispositif de serrage (1).

13. Produit programme informatique, **caractérisé en ce que** le produit programme informatique présente des moyens de codage qui sont adaptés pour exécuter toutes les étapes du procédé selon la revendication 12 lorsque le produit programme informatique est exploité sur une unité de traitement de données.
